# EUROPEAN PATENT SPECIFICATION

(11) **EP 1 630 484 B1**
(45) Date of publication and mention of the grant of the patent: **30.08.2017**
(21) Application number: 04735805.6
(22) Date of filing: 02.06.2004
(51) Int. Cl.: F24F 11/02

(54) **AIR CONDITIONER EQUIPPED WITH A PLURALITY OF OUTDOOR UNITS**
KLIMAANLAGE MIT MEHREREN AUSSENEINHEITEN
CLIMATISEUR EQUIPE DE PLUSIEURS UNITES EXTERIEURES

(30) Priority: 03.06.2003 JP 2003158391
(43) Date of publication of application: 01.03.2006
(73) Proprietor: Toshiba Carrier Corporation, Tokyo 105-8001 (JP)
(72) Inventor: UENO, Kiyotaka Fuji Oper.Center Thoshiba Carrier, Fuji-shi Shizuoka-ken 416-8521 (JP)
(74) Representative: Moreland, David
(86) International application number: PCT/JP2004/007987
(87) International publication number: WO 2004/109192

(56) References cited:
- EP-A- 0 543 622
- EP-A- 0 563 570
- GB-A- 2 257 243
- JP-A- 7 305 915
- JP-A- 2003 156 262

## Description

### Technical Field

The present invention relates to an air conditioner including a plurality of outdoor units having variable-capacity compressors.

### Background Art

Known is an air conditioner having one variable-capacity type outdoor unit as a main unit and a plurality of fixed-capacity type outdoor units as sub-units (for example, JPN PAT APPLN KOKAI PUBLICATION NO. 2001-201192).

The main unit has one variable-capacity compressor configured to allow its number of rotations (capacity) to vary under an inverter drive and one constant-capacity compressor configured to allow an operation to be done with a constant number of rotations (capacity) under a commercial power source drive. The above-mentioned sub-units each have two or more constant-capacity compressors. In accordance with a demand capacity from an indoor side, the variable-capacity compressor has its capacity controlled and the operation of the respective constant-capacity compressor is controlled in an ON/OFF fashion.

The variable-capacity compressor involving a varying number of rotations has a higher probability of malfunctioning than the constant-capacity compressor having a constant number of rotations. If the variable-capacity compressor malfunctions variable-capacity operation corresponding to a demand capacity from the indoor side becomes difficult.

On the other hand, an air conditioner is known in which all the outdoor main unit and outdoor sub-units have a variable-capacity compressor (for example, JPN PAT APPLN KOKOKU PUBLICATION NO. 3291362). In this air conditioner, if any of the respective variable-capacity compressors malfunction, a variable-capacity operation corresponding to a demand capacity from the indoor side can be done.

The above-mentioned respective variable-capacity compressors, however, have their own maximum capacity and, with their maximum capacity as an upper limit, the respective variable-capacity compressor is operated. However, the service life of respective variable-capacity compressors becomes shorter if they are operated under maximum capacity.

EP 0 543 622 relates to an air conditioner having multi-purpose indoor units and multi-purpose outdoor units where the sum of the demand capacity of the indoor units is set on the basis of the type and maximum capacity of the outdoor units.

### Disclosure of Invention

It is accordingly the object of the present invention to provide an air conditioner which can further extend the service life of respective variable-capacity compressors and improve the operation efficiency.

In one aspect of the present invention, there is provided an air conditioner comprising one outdoor main unit configured to have at least one variable-capacity compressor; a plurality of outdoor sub-units configured to have at least one variable-capacity compressor; a plurality of indoor units; a first detection section configured to detect a sum of demand capacities of the respective indoor units; a second detection unit configured to detect a sum of the maximum capacities of the respective variable-capacity compressors; a calculation section configured to calculate a ratio of the sum demand capacity which is detected by the first detection section to the sum maximum capacity detected by the second detection section; a decision section configured to decide whether or not the ratio calculated by the calculation section is lower than a set value; a setting section configured to, when a result of decision by the decision section is affirmative, set a high efficiency operation mode and, when a result of decision by the decision section is negative, set a normal operation mode; a first control section configured to, when the high efficiency operation mode is set, allow the respective variable-capacity compressors to be operated with a capacity lower by a predetermined value than their maximum capacity as an upper limit capacity; and a second control section configured to, when the normal operation mode is set, allow the respective variable-capacity compressors to be operated with their maximum capacity as an upper limit capacity.

### Brief Description of Drawings

FIG. 1 is a view showing an arrangement showing one embodiment of the present invention;
FIG. 2 is a flowchart for explaining the operation of the present embodiment;
FIG. 3 is a flowchart continued from FIG. 2; and
FIG. 4 is a view showing a variation in capacity of each compressor in the present embodiment.

### Best Mode for Carrying Out the Invention

With reference to the drawings, an explanation will be made below about one embodiment of the present invention.

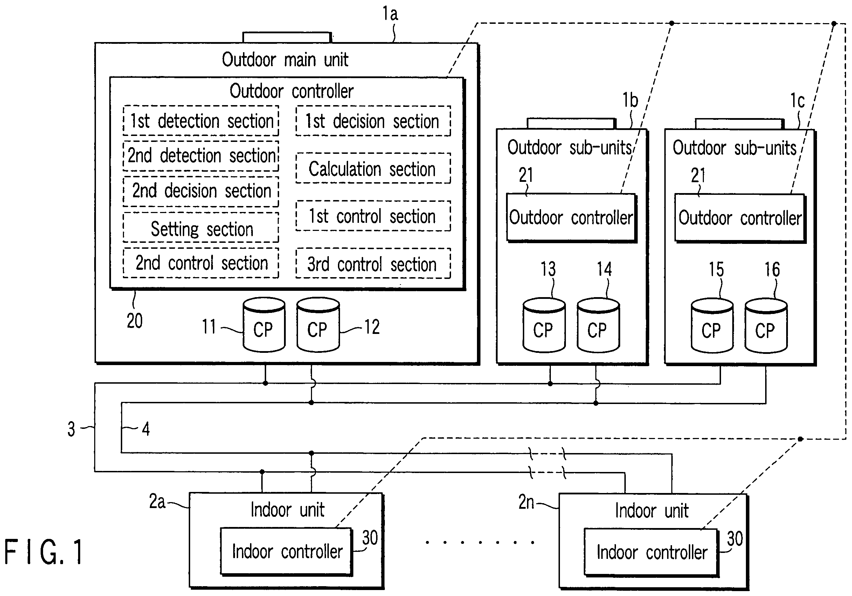

As shown in FIG. 1, one outdoor main unit 1a and a plurality of outdoor sub-units (or simply units) 1b, 1c are connected in a parallel array through a gas tube 3 and a liquid tube 4. A plurality of indoor units 2a, ..., 2n are connected to the gas tube 3 and liquid tube 4. By these connections, a refrigerating cycle is provided.

The outdoor main unit 1a has two variable-capacity compressors 11, 12 which vary their number of rotations (capacity) under the driving of an inverter. The outdoor sub-units 1b, 1c have at least one variable-capacity compressor or at least one constant-capacity compressor operated under a constant number of rotations (constant-capacity) by a commercial power source. In the present embodiment, the outdoor sub-unit 1b has two variable-capacity compressors 13, 14 and the outdoor sub-unit 1c also has two variable-capacity compressors 15, 16.

The maximum capacity F(i) of the variable-capacity compressors 11, 12, 13, 14, 15, 16 is 5 horsepower each. Thus, the outdoor main unit 1a is 10 horsepower and the maximum capacity of the outdoor sub-units is 10 horsepower. The sum maximum capacity F(a) of the outdoor units 1a, 1b, 1c is 30 horsepower.

The priority order of operation is initially set to the outdoor units 1a, 1b and 1c in the order of "1a>1b>1c". From this, the priority order of operations is initially set to the variable-capacity compressors 11, 12, 13, 14, 15 and 16 in the order of "11>12>13>14>15>16".

An outdoor controller 20 is provided in the outdoor main unit 1a and an outdoor controller 21 is provided in the outdoor sub-units 1b and 1c, and indoor controllers 30 are each provided in the indoor units 2a, ..., 2n.

The outdoor controllers 20, 21 are connected to the indoor controllers 30 by signal lines and the resulting air conditioner as a whole is generally controlled by the outdoor controller 20.

The outdoor controller 20 has the following [1] to [9] sections serving as main functions.
[1] A first detection section for detecting a sum n of demand capacities of the indoor units 2a, ..., 2n.
[2] A first decision section for deciding whether or not all the compressors of the outdoor sub-units 1b, 1c are capacitor-variable compressors.
[3] A second detection section for, when a result of decision by the first decision section is affirmative, detecting a sum F(a) of the maximum capacities F(i) of the respective variable-capacity compressors of the outdoor units 1a, 1b, 1c.
[4] A calculation section for, when a result of decision by the first decision section is affirmative, calculating a ratio [= n/F(a)] of the sum demand capacity n which is detected by the first detection section to the sum maximum capacity F(a) which is detected by the second detection section.
[5] A second decision section for deciding whether or not the ratio calculated by the calculation section is below a set value Q (80% for example).
[6] A setting section for setting a high efficiency operation mode if a result of decision by the second decision section is affirmative and setting a normal operation mode if negative.
[7] A first control section for, when the above-mentioned high efficiency operation mode is set, allowing the respective variable-capacity compressors to be sequentially operated in the above-mentioned priority order under a capacity (for example, 80% of the maximum capacity) lower by a predetermined value than the maximum capacity (5 horsepower) and, at a time when the sum operation capacity F(a) of the presently-operating variable-capacity compressors is exceeded relative to the sum demand capacity n detected by the first detection section, allowing the operation capacity of the variable-capacity compressors 11, 12 of the outdoor main unit 1a to be lowered by that excess portion without newly operating the respective variable-capacity compressors.
[8] A second control section for, when the above-mentioned normal operation mode is set, allowing the respective variable-capacity compressors to be sequentially operated in the above-mentioned priority order under their maximum capacity (5 horsepower) and, at a time point when the sum operation power F(a) of the presently-operating variable-capacity compressors is exceeded relative to the sum demand capacity n detected by the first detection section, allowing the operation capacity of the variable-capacity compressors 11, 12 of the outdoor main unit 1a to be lowered by that excess portion without newly operating the respective variable-capacity compressors.
[9] A third control section for, when the result of decision by the first decision section is negative, allowing the respective compressors (variable-capacity and constant-capacity compressors) of the outdoor units 1a, 1b, 1c to be sequentially operated in the above-mentioned priority order under their maximum capacity or constant capacity and, at a time point when the sum operation capacity F(a) of the now-operating compressors is exceeded relative to the sum demand capacity n detected by the first detection section, allowing the operation capacity of the variable-capacity compressors 11, 12 in the outdoor main unit 1a to be lowered by that excess portion without newly operating the respective compressors.

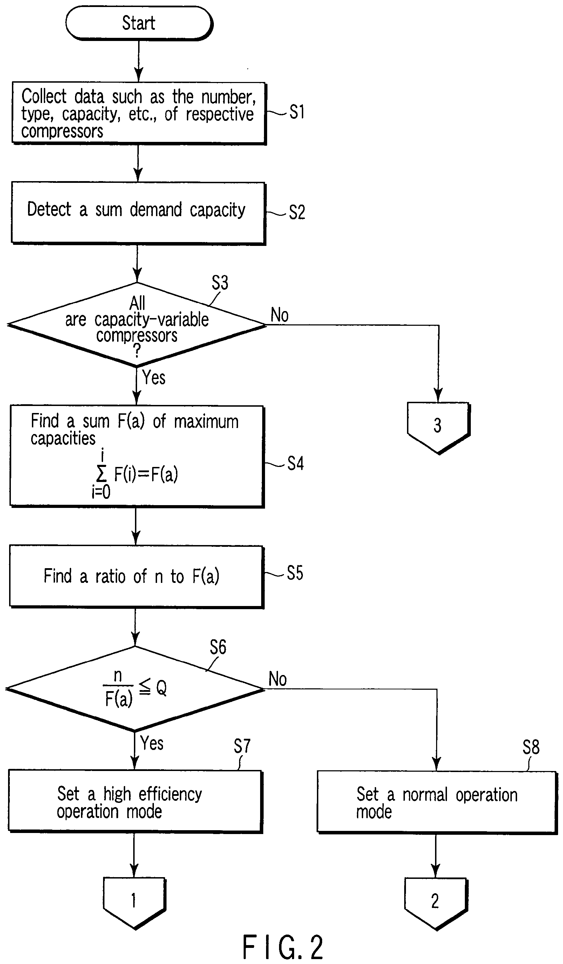

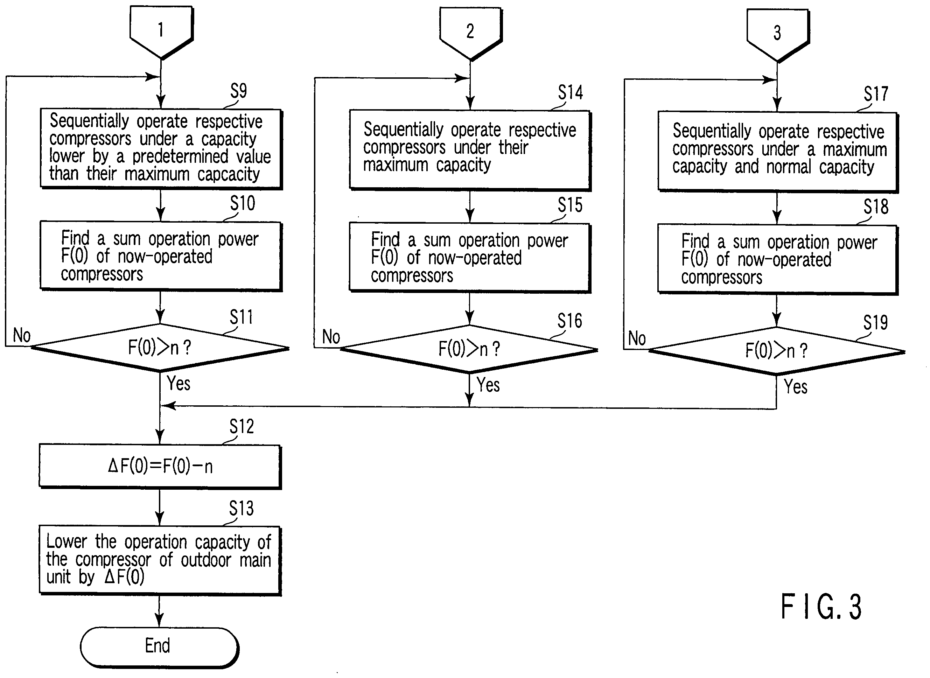

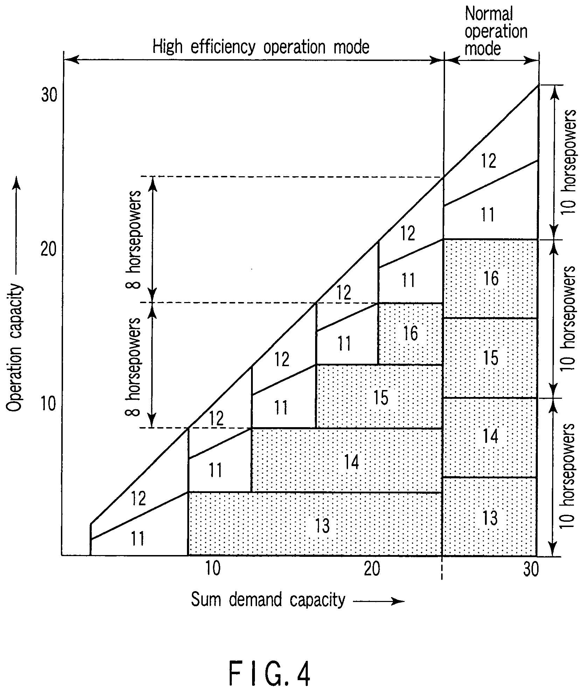

Now, the operation of the above-mentioned structure will be explained below by referring to flowcharts of FIGS. 2, 3 and 4.

The outdoor main unit 1a receives, from the outdoor sub-units 1b and 1c, data such as the number of the respective compressors in the outdoor sub-units 1b, 1c, the types of the respective compressors (variable-capacity/constant-capacity compressors), the capacity (maximum capacity or constant capacity) of the respective compressors-step S1.

A sum n of demand capacities of the indoor units 2a, ... 2n, that is, an air conditioner load, is detected based on the data transmitted from the outdoor sub-units 1b, 1c to the outdoor main units 1a (step S2).

It is decided whether or not the compressors 13, 14, 15, 16 of the outdoor sub-units 1b, 1c are all variable-capacity compressors based on the received data (step S3). Since, in the present embodiment, the compressors 13, 14, 15, 16 are all variable-capacity compressors, the result of decision is affirmative (YES at step S3). Based on this decision and above-mentioned received data, the sum F(a) of the maximum capacities of the variable-capacity compressors 11, 12, 13, 14 is detected (step S4).

A ratio [= n/F(a)] of the detected sum demand capacity n to the detected sum maximum capacity F(a) is calculated (step S6). Next, it is decided whether or not the calculated ratio [= n/F(a)] is lower than a set value Q (for example, 80%) (step S6).

If the calculated ratio is lower than the set value Q (YES at step S6), a high efficiency operation mode is set (step S7). If the calculated ratio is higher than the set ratio Q (NO at step S6), a normal operation mode is set (step S8).

In the high efficiency operation mode, the variable-capacity compressors 11, 12, 13, 14, 15, 16 are sequentially operated under a capacity (80% of the maximum capacity) lower by a predetermined value than their maximum capacities (step S9). Next, the sum operation capacity F(0) of presently-operating variable-capacity compressors is found-step (step S10). It is decided that whether or not the sum operation capacity F(0) is exceeded relative to the sum demand capacity n detected at step S2 (step S11).

If the sum operation capacity F(0) is exceeded relative to the sum demand capacity n detected at step (S2)-YES at step S11, the respective variable-capacity compressors are stopped from being newly operated. And an excess portion ΔF(0) (= F(0)-n) of the sum operation capacity F(0) relative to the sum demand capacity n is found-step S12 and the operation capacity of the variable-capacity compressors 11, 12 relative to the outdoor main unit 1a is lowered by that excess portion ΔF(0) (step S13).

In the high efficiency operation mode, the variable-capacity compressors 11, 12, 13, 14, 15, 16 are operated with a capacity (80% of the maximum capacity) lower by a predetermined value than their maximum capacity as an upper limit capacity.

In the above-mentioned operation mode, the variable-capacity compressors 11, 12, 13, 14, 15, 16 are sequentially operated at their maximum capacity-step S14. The sum operation capacity F(0) of the now-operated variable-capacity compressors is then found (step S15). It is decided whether or not the sum operation capacity F(0) is exceeded relative to the sum demand capacity detected at step S2 (step S16).

If the sum operation capacity F(0) is exceeded relative to the sum demand capacity n detected at step S2-YES at step S16, the respective capacity variable compressors are stopped from being newly operated. The excess portion ΔF(0) (= F(0)-n) of the sum operation capacity F(0) relative to the sum demand capacity n is then found (step S12) and the operation capacity of the variable-capacity compressors 11, 12 in the outdoor main unit 1a is lowered by the excess portion ΔF(0) (step S13).

On the other hand, any of the compressors 13, 14, 15, 16 of the outdoor sub-units 1b, 1c can be changed to a constant-capacity compressor. Suppose that any of the compressors 13, 14, 15, 16 is changed to a constant-capacity compressor. In this case, a result of decision at step S3 in negative (NO at step S3).

If the result of decision at step S3 is negative (NO at step S3), the variable-capacity compressors 11, 12, 13, 14, 15, 16 are sequentially operated under their maximum capacity and constant capacity (step S17). The sum operation capacity F(0) of the now-operated capacity variable compressors is then found (step S18). It is then decided whether or not the sum operation capacity F(0) is exceeded relative to the sum demand capacity n detected at step S2 (step S19).

If the sum operation capacity F(0) is exceeded relative to the sum demand capacity n detected at step S2-YES at step S19, the respective variable-capacity compressors are stopped from being newly operated. The excess portion ΔF(0) (= F(0)-n) of the sum operation capacity F(0) relative to the sum demand capacity n is found (step S12). The operation capacity of the capacity variable compressors 11, 12 in the outdoor main unit 1a is then lowered by the excess portion ΔF(0) (step S13).

As set out above, the variable-capacity compressors 11, 12, 13, 14, 15, 16 have a high efficiency operation mode function of operating these with a lower-than-maximum capacity as an upper limit capacity. In this way, there is less chance of these variable-capacity compressors being operated at their maximum capacity level, so that the life of the variable-capacity compressors 11, 12, 13, 14, 15, 16 can be extended over as long a period as possible.

Further, in the high efficiency operation mode, the variable-capacity compressors 11, 12, 13, 14, 15, 16 are operated at a lower-than-maximum capacity level and the operation efficiency of these compressors is improved.

At a time point when the sum operation capacity F(0) of the variable-capacity compressors is exceeded relative to the sum demand capacity n, the operation capacity of the variable-capacity compressors 11, 12 is lowered by that excess portion. Since the operation time under the maximum capacity of the compressors 11, 12 is further shortened, the service life of the compressors 11, 12 is further extended.

Since the variable-capacity operation is borne by the variable-capacity compressors 11, 12 in the outdoor main unit 1a and it is not borne by the variable-capacity compressors 13, 14, 15, 16 of outdoor sub-units 1b, 1c, there is less hunting and speed adjustment of these compressors 13, 14, 15, 16 of the outdoor sub-units 1b, 1c. As a result, the life of these variable-capacity compressors 13, 14, 15, 16 is further improved.

### Industrial Applicability

It is possible to apply the present invention to a larger-sized air conditioner having a plurality of outdoor units.

## Claims

1. An air conditioner comprising:
one outdoor main unit (1a) having at least one variable-capacity compressor (11, 12);
a plurality of outdoor sub-units (1b, 1c) having at least one variable-capacity compressor (13, 14, 15, 16);
a plurality of indoor units (2a, 2n);
a first detection section configured to detect a sum n, of demand capacities of the indoor units (2a, 2n);
a second detection section configured to detect a sum F(a) of maximum capacities F(i) of the respective variable-capacity compressors (11, 12, 13, 14, 15, 16);
a calculation section configured to detect a ratio n/F(a) of the sum demand capacity n which is detected by the first detection section to the sum maximum capacity F(a) which is detected by the second detection section:
a decision section configured to decide whether or not the ratio n/F(a) calculated by the calculation section is below a set value Q;
a setting section configured to set a higher efficiency operation mode when a result of decision by the decision section is affirmative and a normal operation mode when a result of decision by the decision section is negative;
a first control section configured to, when the higher efficiency operation mode is set, allow the respective variable-capacity compressors (11, 12, 13, 14, 15, 16) to be operated with a capacity lower by a predetermined value than their maximum capacity as an upper limit capacity; and
a second control section configured to, when the normal operation mode is set, allow the respective variable-capacity compressors (11, 12, 13, 14, 15, 16) to be operated with their maximum capacity as an upper limit capacity.

2. An air conditioner according to claim 1, wherein
the first control section is configured to, when the high efficiency operation mode is set, allow the variable-capacity compressors (11, 12, 13, 14, 15, 16) of the respective outdoor units (1 a, 1b, 1c) to be sequentially operated with a capacity lower by a predetermined value than their maximum capacity and, at a time point when the sum operation capacity of the now-operating variable-capacity compressors is exceeded relative to a sum demand capacity n detected by the first detection section, allow the operation capacity of the variable-capacity compressor (11, 12, 13, 14, 15, 16) in the outdoor main unit (1a) to be lowered by an excess portion without newly operating the variable-capacity compressors (11, 12); and
the second control section is configured to, when the normal operation mode is set, allow the variable-capacity compressors (11, 12, 13, 14, 15, 16) of the respective outdoor units (1a, 1b, 1c) to be sequentially operated under their maximum capacity and, at a time point when the sum operation capacity of the now-operated variable-capacity compressors is exceeded relative to the sum demand capacity detected by the first detection section, allow the operation capacity of the variable-capacity compressor (11, 12) of the outdoor main unit (1a) to be lowered by that excess portion without newly operating the respective variable-capacity compressors (11, 12, 13, 14, 15, 16).

3. An air conditioner according to claim 1, wherein the outdoor main unit (1a) and respective outdoor sub-units (1 b, 1 c) have an initially set priority order of operation and the priority order of operation of the outdoor main unit (1a) is higher than that of the respective outdoor sub-units (1b, 1c).

4. An air conditioner according to claim 3, wherein
the first control unit is configured to, when the high efficiency operation mode is set allow the variable-capacity compressors (11, 12, 13, 14, 15, 16) of the respective outdoor units (1a, 1b, 1c) to be sequentially operated under a capacity lower by a predetermined value than their maximum capacity and in accordance with the priority order of operation and, at a time point when the sum operation capacity of the now-operated variable-capacity compressors (11, 12, 13, 14, 15, 16) is exceeded relative to the sum demand capacity detected by the first detection section, allow the operation capacity of the variable-capacity compressor (11, 12) of the outdoor main unit (1a) to be lowered by that excess portion without newly operating the respective variable-capacity compressors (11, 12, 13, 14, 15, 16); and
the second control section is configured to, when the normal operation mode is set, allow the variable-capacity compressors (11, 12, 13, 14, 15, 16) of the respective outdoor units (1a, 1b, 1c) to be sequentially operated under maximum capacity and in accordance with the priority order of operation and, at a time point when a sum operation capacity of the now-operated variable-capacity compressors is exceeded relative to a sum demand capacity detected by the first detection section, allow the operation capacity of the variable-capacity compressor (11, 12) of the outdoor main unit (1a) to be lowered by the excess portion without newly operating the respective capacity variable compressors (11, 12, 13, 14, 15, 16).

5. An air conditioner comprising:
one outdoor main unit (1a) having at least one variable-capacity compressor (11, 12);
outdoor sub-units (1b, 1c) configured to have at least one variable-capacity compressor (13, 14, 15, 16) or at least one constant-capacity compressor;
a plurality of indoor units (2a, 2n);
a first detection section configured to detect a sum n of demand capacities of the indoor units (2a, 2n):
a first decision section configured to decide whether or not all the compressors of the outdoor sub-units (1b, 1 c) are variable-capacity compressors;
a second detection section configured to, if a result of decision by the first decision section is affirmative, detect a sum F(a) of maximum capacities F(i) of the respective variable-capacity compressors (11, 12, 13, 14, 15, 16);
a calculation section configured to, if a result of decision by the first decision section is affirmative, calculate a ratio n/F(a) of the sum demand capacity n which is detected by the first detection section to the sum maximum capacity F(a) detected by the second detection section;
a second decision section configured to decide whether or not the ratio n/F(a) which is calculated by the calculation section is lower than a set value Q;
a setting section configured to, if a result of decision by the second decision section is affirmative, set a high efficiency operation mode and, if a result of decision is negative, set a normal operation mode;
a first control section configured to, when the high efficiency operation mode is set, allow the respective variable-capacity compressors (11, 12, 13, 14, 15, 16) to be sequentially operated under a capacity lower by a predetermined value than their maximum capacity and, at a time point when the sum operation capacity of the now-operated variable-capacity compressors is exceeded relative to a sum demand capacity (n) detected by the first detection section, allow the operation capacity of the variable-capacity compressor (11, 12) of the outdoor main unit (1a) to be lowered by that excess portion without newly operating the respective variable-capacity compressor;
a second control section configured to, when the normal operation mode is set, allow the respective variable-capacity compressors (11, 12, 13, 14, 15, 16) to be sequentially operated under their maximum capacity and at a time point when the sum operation capacity of the now-operated variable-capacity compressors is exceeded relative to a sum demand capacity detected by the first detection section, allow the operation capacity of the variable-capacity compressor (11, 12) of the outdoor main unit (1a) to be lowered by that excess portion without newly operating the respective variable-capacity compressor; and
a third control section configured to, when a result of decision by the first decision section is negative, allow the compressors to be sequentially operated under their maximum capacity and constant capacity and, at a time point when the sum operation capacity of the now-operated compressors is exceeded relative to the sum demand capacity detected by the first detection section, allow the operation capacity of the variable-capacity compressor (11, 12) of the outdoor main unit (1a) to be lowered by that excess portion without newly operating the respective compressor.

6. An air conditioner according to claim 5, wherein the outdoor main unit (1a) and outdoor sub-units (1b, 1c) have an initially set priority order of operation and the priority order of operation of the outdoor main unit (1a) is higher than that of the respective outdoor sub-units (1b, 1c).

## Patentansprüche

1. Klimaanlage, umfassend:
eine Hauptaußeneinheit (1a) mit mindestens einem Verdichter mit veränderlicher Kapazität (11, 12);
eine Vielzahl von Unteraußeneinheiten (1b, 1c) mit mindestens einem Verdichter mit veränderlicher Kapazität (13, 14, 15, 16);
eine Vielzahl von Inneneinheiten (2a, ...2n);
einen ersten Erkennungsabschnitt, der konfiguriert ist, um eine Summe n von Anforderungskapazitäten der Inneneinheiten (2a, ...2n) zu erfassen;
einen zweiten Erkennungsabschnitt, der konfiguriert ist, um eine Summe F(a) von Maximalkapazitäten F(i) der jeweiligen Verdichter mit veränderlicher Kapazität (11, 12, 13, 14, 15, 16) zu erkennen;
einen Berechnungsabschnitt, der konfiguriert ist, um ein Verhältnis n/F(a) der vom ersten Erkennungsabschnitt erkannten Gesamtanforderungskapazität n zu der von der zweiten Erkennungseinheit erkannten Gesamtmaximalkapazität F(a) zu erkennen;
einen Entscheidungsabschnitt, der konfiguriert ist, um zu entscheiden, ob das von dem Berechnungsabschnitt berechnete Verhältnis n/F(a) unter einem Sollwert Q liegt;
einen Einstellabschnitt, der konfiguriert ist, um einen Betriebsmodus mit höherer Effizienz einzustellen, wenn ein Entscheidungsergebnis des Entscheidungsabschnitts positiv ist, und einen Normalbetriebsmodus einzustellen, wenn ein Entscheidungsergebnis des Entscheidungsabschnitts negativ ist;
einen ersten Steuerungsabschnitt, der konfiguriert ist, um, wenn der Betriebsmodus mit höherer Effizienz eingestellt ist, es den jeweiligen Verdichtern mit veränderlicher Kapazität (11, 12, 13, 14, 15, 16) zu gestatten, mit einer Kapazität, die um einen festgelegten Wert niedriger ist als ihre Maximalkapazität, als eine Höchstmaßkapazität betrieben zu werden; und
einen zweiten Steuerungsabschnitt, der konfiguriert ist, um, wenn der Normalbetriebsmodus eingestellt ist, es den jeweiligen Verdichtern mit veränderlicher Kapazität (11, 12, 13, 14, 15, 16) zu gestatten, mit ihrer Maximalkapazität als eine Höchstmaßkapazität betrieben zu werden.

2. Klimaanlage nach Anspruch 1, wobei
der erste Steuerungsabschnitt konfiguriert ist, um, wenn der Hocheffizienzbetriebsmodus eingestellt ist, es den Verdichtern mit veränderlicher Kapazität (11, 12, 13, 14, 15, 16) der jeweiligen Außeneinheiten (1a, 1b, 1c) zu gestatten, aufeinanderfolgend mit einer Kapazität betrieben zu werden, die um einen festgelegten Wert niedriger ist als ihre Maximalkapazität, und zu einem Zeitpunkt, an dem die Gesamtbetriebskapazität der derzeit betriebenen Verdichter mit veränderlicher Kapazität relativ zu einer von dem ersten Erkennungsabschnitt erkannten Gesamtanforderungskapazität n überschritten ist, zu gestatten, dass die Betriebskapazität des Verdichters mit veränderlicher Kapazität (11, 12, 13, 14, 15, 16) in der Hauptaußeneinheit (1a) um einen Überschreitungsanteil gesenkt wird, ohne die Verdichter mit veränderlicher Kapazität (11, 12) erneut zu betreiben; und
der zweite Steuerungsabschnitt konfiguriert ist, um, wenn der Normalbetriebsmodus eingestellt ist, es den Verdichtern mit veränderlicher Kapazität (11, 12, 13, 14, 15, 16) der jeweiligen Außeneinheiten (1a, 1b, 1c) zu gestatten, aufeinanderfolgend mit ihrer Maximalkapazität betrieben zu werden, und zu einem Zeitpunkt, an dem die Gesamtbetriebskapazität der derzeit betriebenen Verdichter mit veränderlicher Kapazität relativ zu der von dem ersten Erkennungsabschnitt erkannten Gesamtanforderungskapazität überschritten ist, zu gestatten, dass die Betriebskapazität des Verdichters mit veränderlicher Kapazität (11, 12) der Hauptaußeneinheit (1a) um den Überschreitungsanteil gesenkt wird, ohne die jeweiligen Verdichter mit veränderlicher Kapazität (11, 12, 13, 14, 15, 16) erneut zu betreiben.

3. Klimaanlage nach Anspruch 1, wobei die Hauptaußeneinheit (1a) und die jeweiligen Unteraußeneinheiten (1b, 1c) eine voreingestellte Prioritätsbetriebsordnung haben und die Prioritätsbetriebsordnung der Hauptaußeneinheit (1a) höher ist als die der jeweiligen Unteraußeneinheiten (1b, 1c).

4. Klimaanlage nach Anspruch 3, wobei
die erste Steuerungseinheit konfiguriert ist, um, wenn der Hocheffizienzbetriebsmodus eingestellt ist, es den Verdichtern mit veränderlicher Kapazität (11, 12, 13, 14, 15, 16) der jeweiligen Außeneinheiten (1a, 1b, 1c) zu gestatten, aufeinanderfolgend mit einer Kapazität, die um einen festgelegten Wert niedriger ist als ihre Maximalkapazität und gemäß der Prioritätsbetriebsordnung betrieben zu werden, und zu einem Zeitpunkt, an dem die Gesamtbetriebskapazität der derzeit betriebenen Verdichter mit veränderlicher Kapazität (11, 12, 13, 14, 15, 16) relativ zu einer von dem ersten Erkennungsabschnitt erkannten Gesamtanforderungskapazität überschritten ist, zu gestatten, dass die Betriebskapazität des Verdichters mit veränderlicher Kapazität (11, 12) der Hauptaußeneinheit (1a) um den Überschreitungsanteil gesenkt wird, ohne die jeweiligen Verdichter mit veränderlicher Kapazität (11, 12, 13, 14, 15, 16) erneut zu betreiben; und
der zweite Steuerungsabschnitt konfiguriert ist, um, wenn der Normalbetriebsmodus eingestellt ist, es den Verdichtern mit veränderlicher Kapazität (11, 12, 13, 14, 15, 16) der jeweiligen Außeneinheiten (1a, 1b, 1c) zu gestatten, aufeinanderfolgend mit Maximalkapazität und gemäß der Prioritätsbetriebsordnung betrieben zu werden, und zu einem Zeitpunkt, an dem die Gesamtbetriebskapazität der derzeit betriebenen Verdichter mit veränderlicher Kapazität relativ zu einer von dem ersten Erkennungsabschnitt erkannten Gesamtanforderungskapazität überschritten ist, zu gestatten, dass die Betriebskapazität des Verdichters mit veränderlicher Kapazität (11, 12) der Hauptaußeneinheit (1a) um den Überschreitungsanteil gesenkt wird, ohne die jeweiligen Verdichter mit veränderlicher Kapazität (11, 12, 13, 14, 15, 16) erneut zu betreiben.

5. Klimaanlage, umfassend:
eine Hauptaußeneinheit (1a) mit mindestens einem Verdichter mit veränderlicher Kapazität (11, 12);
Unteraußeneinheiten (1b, 1c), die konfiguriert sind, um mindestens einen Verdichter mit veränderlicher Kapazität (13, 14, 15, 16) oder mindestens einen Verdichter mit konstanter Kapazität zu haben;
eine Vielzahl von Inneneinheiten (2a, ...2n);
einen ersten Erkennungsabschnitt, der konfiguriert ist, um eine Summe n von Anforderungskapazitäten der Inneneinheiten (2a, ...2n) zu erkennen;
einen ersten Entscheidungsabschnitt, der konfiguriert ist, um zu entscheiden, ob alle Verdichter der Unteraußeneinheiten (1b, 1c) Verdichter mit veränderlicher Kapazität sind;
einen zweiten Erkennungsabschnitt, der konfiguriert ist, um, wenn ein Entscheidungsergebnis des ersten Entscheidungsabschnitts positiv ist, eine Summe F(a) von Maximalkapazitäten F(i) der jeweiligen Verdichter mit veränderlicher Kapazität (11, 12, 13, 14, 15, 16) zu erkennen;
einen Berechnungsabschnitt, der konfiguriert ist, um, wenn ein Entscheidungsergebnis des ersten Entscheidungsabschnitts positiv ist, ein Verhältnis n/F(a) der vom ersten Erkennungsabschnitt erkannten Gesamtanforderungskapazität n zu der von dem zweiten Erkennungsabschnitt erkannten Gesamtmaximalkapazität F(a) zu berechnen;
einen zweiten Entscheidungsabschnitt, der konfiguriert ist, um zu entscheiden, ob das von dem Berechnungsabschnitt berechnete Verhältnis n/F(a) unter einem Sollwert Q liegt;
einen Einstellabschnitt, der konfiguriert ist, um, wenn ein Entscheidungsergebnis des zweiten Entscheidungsabschnitts positiv ist, einen Hocheffizienzbetriebsmodus einzustellen, und wenn ein Entscheidungsergebnis negativ ist, einen normalen Betriebsmodus einzustellen;
einen ersten Steuerungsabschnitt, der konfiguriert ist, um, wenn der Hocheffizienzbetriebsmodus eingestellt ist, es den Verdichtern mit veränderlicher Kapazität (11, 12, 13, 14, 15, 16) zu gestatten, aufeinanderfolgend mit einer Kapazität, die um einen festgelegten Wert niedriger ist als ihre Maximalkapazität, betrieben zu werden, und zu einem Zeitpunkt, an dem die Gesamtbetriebskapazität der derzeit betriebenen Verdichter mit veränderlicher Kapazität relativ zu einer von dem ersten Erkennungsabschnitt erkannten Gesamtanforderungskapazität (n) überschritten ist, zu gestatten, dass die Betriebskapazität des Verdichters mit veränderlicher Kapazität (11, 12) der Hauptaußeneinheit (1a) um den Überschreitungsanteil gesenkt wird, ohne den jeweiligen Verdichter mit veränderlicher Kapazität erneut zu betreiben;
einen zweiten Steuerungsabschnitt, der konfiguriert ist, um, wenn der Normalbetriebsmodus eingestellt ist, es den Verdichtern mit veränderlicher Kapazität (11, 12, 13, 14, 15, 16) zu gestatten, aufeinanderfolgend mit Maximalkapazität betrieben zu werden, und zu einem Zeitpunkt, an dem die Gesamtbetriebskapazität der derzeit betriebenen Verdichter mit veränderlicher Kapazität relativ zu einer von dem ersten Erkennungsabschnitt erkannten Gesamtanforderungskapazität überschritten ist, zu gestatten, dass die Betriebskapazität des Verdichters mit veränderlicher Kapazität (11, 12) der Hauptaußeneinheit (1a) um den Überschreitungsanteil gesenkt wird, ohne den jeweiligen Verdichter mit veränderlicher Kapazität erneut zu betreiben; und
einen dritten Steuerungsabschnitt, der konfiguriert ist, um, wenn ein Entscheidungsergebnis der ersten Entscheidungseinheit negativ ist, es den Verdichtern zu gestatten, aufeinanderfolgend mit ihrer Maximalkapazität und konstanten Kapazität betrieben zu werden, und zu einem Zeitpunkt, an dem die Gesamtbetriebskapazität der derzeit betriebenen Verdichter relativ zu der von dem ersten Erkennungsabschnitt erkannten Gesamtanforderungskapazität überschritten ist, zu gestatten, dass die Betriebskapazität des Verdichters mit veränderlicher Kapazität (11, 12) der Hauptaußeneinheit (1a) um den Überschreitungsanteil gesenkt wird, ohne den jeweiligen Verdichter erneut zu betreiben.

6. Klimaanlage nach Anspruch 5, wobei die Hauptaußeneinheit (1a) und die jeweiligen Unteraußeneinheiten (1b, 1c) eine voreingestellte Prioritätsbetriebsordnung haben und die Prioritätsbetriebsordnung der Hauptaußeneinheit (1a) höher ist als die der jeweiligen Unteraußeneinheiten (1b, 1c).

## Revendications

1. Climatiseur qui comprend :
une unité principale extérieure (la) qui possède au moins un compresseur à capacité variable (11, 12) ;
une pluralité de sous-unités extérieures (1b, 1c) qui possèdent au moins un compresseur à capacité variable (13, 14, 15, 16) ;
une pluralité d'unités intérieures (2a, ..., 2n) ;
une première section de détection configurée pour détecter une somme n de capacités de demande des unités intérieures (2a, ..., 2n) ;
une seconde section de détection configurée pour détecter une somme F(a) des capacités maximales F(i) des compresseurs à capacité variable respectifs (11, 12, 13, 14, 15, 16) ;
une section de calcul configurée pour détecter un rapport n/F(a) entre la somme de la capacité de demande n qui est détectée par la première section de détection et la somme de la capacité maximale F (a) qui est détectée par la seconde section de détection ;
une section de décision configurée pour décider si le rapport n/F (a) calculé par la section de calcul est inférieur ou non à une valeur définie Q ;
une section de définition configurée pour définir un mode de fonctionnement à plus grande efficacité lorsqu'un résultat de la décision par la section de décision est affirmatif, et un mode de fonctionnement normal lorsqu'un résultat de la décision par la section de décision est négatif ;
une première section de contrôle configurée pour, lorsque le mode de fonctionnement à plus grande efficacité est défini, permettre aux compresseurs à capacité variable respectifs (11, 12, 13, 14, 15, 16) d'être déclenchés avec une capacité inférieure selon une valeur prédéterminée à leur capacité maximale en guise de capacité limite supérieure ; et
une seconde section de contrôle configurée pour, lorsque le mode de fonctionnement normal est défini, permettre aux compresseurs à capacité variable respectifs (11, 12, 13, 14, 15, 16) d'être déclenchés avec leur capacité maximale en guise de capacité limite supérieure.

2. Climatiseur selon la revendication 1, dans lequel
la première section de contrôle est configurée pour, lorsque le mode de fonctionnement à plus grande efficacité est défini, permettre aux compresseurs à capacité variable (11, 12, 13, 14, 15, 16) des unités extérieures respectives (1a, 1b, 1c) d'être déclenchés séquentiellement avec une capacité inférieure selon une valeur prédéterminée à leur capacité maximale, et, au moment où la somme des capacités de fonctionnement des compresseurs à capacité variable en état de fonctionnement est dépassée par rapport à une somme de capacités de demande n détectée par la première section de détection, permettre à la capacité de fonctionnement des compresseurs à capacité variable (11, 12, 13, 14, 15, 16) dans l'unité principale extérieure (1a) d'être réduite selon une partie d'excédent, sans déclencher à nouveau les compresseurs à capacité variable (11, 12) ; et
la seconde section de contrôle est configurée pour, lorsque le mode de fonctionnement normal est défini, permettre aux compresseurs à capacité variable (11, 12, 13, 14, 15, 16) des unités extérieures respectives (1a, 1b, 1c) d'être déclenchés séquentiellement à leur capacité maximale et, au moment où la somme des capacités de fonctionnement des compresseurs à capacité variable en état de fonctionnement est dépassée par rapport à la somme des capacités de demande détectée par la première section de détection, pour permettre à la capacité de fonctionnement des compresseurs à capacité variable (11, 12) de l'unité principale extérieure (1a) d'être réduite selon cette partie d'excédent sans déclencher à nouveau les compresseurs à capacité variable respectifs (11, 12, 13, 14, 15, 16).

3. Climatiseur selon la revendication 1, dans lequel l'unité principale extérieure (1a) et les sous-unités extérieures respectives (1b, 1c) possèdent un ordre de fonctionnement prioritaire défini initialement et l'ordre de fonctionnement prioritaire de l'unité principale extérieure (1a) est plus élevé que celui des sous-unités extérieures respectives (1b, 1c).

4. Climatiseur selon la revendication 3, dans lequel
la première unité de contrôle est configurée pour, lorsque le mode de fonctionnement à haute efficacité est défini, permettre aux compresseurs à capacité variable (11, 12, 13, 14, 15, 16) des unités extérieures respectives (1a, 1b, 1c) d'être déclenchés séquentiellement avec une capacité inférieure selon une valeur prédéterminée à leur capacité maximale et selon l'ordre de fonctionnement prioritaire et, au moment où la somme des capacités de fonctionnement des compresseurs à capacité variable en état de fonctionnement (11, 12, 13, 14, 15, 16) est dépassée par rapport à la somme des capacités de demande détectée par la première section de détection, pour permettre à la capacité de fonctionnement des compresseurs à capacité variable (11, 12) de l'unité principale extérieure (1a) d'être réduite selon cette partie d'excédent sans déclencher à nouveau les compresseurs à capacité variable respectifs (11, 12, 13, 14, 15, 16) ; et
la seconde section de contrôle est configurée pour, lorsque le mode de fonctionnement normal est défini, permettre aux compresseurs à capacité variable (11, 12, 13, 14, 15, 16) des unités extérieures respectives (1a, 1b, 1c) d'être déclenchés séquentiellement avec leur capacité maximale et selon l'ordre de fonctionnement prioritaire et, au moment où une somme des capacités de fonctionnement des compresseurs à capacité variable en état de fonctionnement est dépassée par rapport à une somme des capacités de demande détectée par la première section de détection, pour permettre à la capacité de fonctionnement du compresseur à capacité variable (11, 12) de l'unité principale extérieure (1a) d'être réduite selon la partie d'excédent sans déclencher à nouveau les compresseurs à capacité variable respectifs (11, 12, 13, 14, 15, 16).

5. Climatiseur qui comprend :
une unité principale extérieure (1a) qui possède au moins un compresseur à capacité variable (11, 12) ;
des sous-unités extérieures (1b, 1c) configurées pour avoir au moins un compresseur à capacité variable (13, 14, 15, 16) ou au moins un compresseur à capacité constante ;
une pluralité d'unités intérieures (2a, ..., 2n) ;
une première section de détection configurée pour détecter une somme n de capacités de demande des unités intérieures (2a, ..., 2n) ;
une première section de décision configurée pour décider si tous les compresseurs des sous-unités extérieures (1b, 1c) sont des compresseurs à capacité variable ou non ;
une seconde section de détection configurée pour, si un résultat de décision par la première section de décision est affirmatif, détecter une somme F (a) des capacités maximales F(i) des compresseurs à capacité variable respectifs (11, 12, 13, 14, 15, 16) ;
une section de calcul configurée pour, si un résultat de détection par la première section de décision est affirmatif, calculer un rapport n/F(a) entre la somme des capacités de demande n qui est détectée par la première section de détection et la somme des capacités maximales F (a) détectée par la seconde section de détection ;
une seconde section de décision configurée pour décider si le rapport n/F (a) qui est calculé par la section de calcul est inférieur à une valeur définie Q ;
une section de définition configurée pour, si un résultat de la décision par la seconde section de décision est affirmatif, définir un mode de fonctionnement à haute efficacité et, si un résultat de la décision est négatif, pour définir un mode de fonctionnement normal ;
une première section de contrôle configurée pour, lorsque le mode de fonctionnement à haute efficacité est défini, permettre aux compresseurs à capacité variable respectifs (11, 12, 13, 14, 15, 16) d'être déclenchés séquentiellement avec une capacité inférieure selon une valeur prédéterminée à leur capacité maximale et, au moment où la somme des capacités de fonctionnement des compresseurs à capacité variable en état de fonctionnement est dépassée par rapport à une somme des capacités de demande (n) détectée par la première section de détection, pour permettre à la capacité de fonctionnement du compresseur à capacité variable (11, 12) de l'unité principale extérieure (1a) d'être réduite selon cette partie d'excédent sans déclencher de nouveau le compresseur à capacité variable respectif ;
une seconde section de contrôle configurée pour, lorsque le mode de fonctionnement normal est défini, permettre aux compresseurs à capacité variable respectifs (11, 12, 13, 14, 15, 16) d'être déclenchés séquentiellement avec leur capacité maximale et, au moment où la somme des capacités de fonctionnement des compresseurs à capacité variable en état de fonctionnement est dépassée par rapport à une somme des capacités de demande détectée par la première section de détection, pour permettre à la capacité de fonctionnement du compresseur à capacité variable (11, 12) de l'unité principale extérieure (1a) d'être réduite selon cette partie d'excédent sans déclencher de nouveau le compresseur à capacité variable respectif ; et
une troisième section de contrôle configurée pour, lorsqu'un résultat de la décision par la première section de décision est négatif, permettre aux compresseurs d'être déclenchés séquentiellement avec leur capacité maximale et leur capacité constante et, au moment où la somme des capacités de fonctionnement des compresseurs en état de fonctionnement est dépassée par rapport à la somme des capacités de demande détectée par la première section de détection, pour permettre à la capacité de fonctionnement du compresseur à capacité variable (11, 12) de l'unité principale extérieure (1a) d'être réduite selon cette partie d'excédent sans déclencher de nouveau le compresseur respectif.

6. Climatiseur selon la revendication 5, dans lequel l'unité principal extérieure (1a) et les sous-unités extérieures (1b, 1c) possèdent un ordre de fonctionnement prioritaire défini initialement et l'ordre de fonctionnement prioritaire de l'unité principale extérieure (1a) est plus élevé que celui des sous-unités extérieures respectives (1b, 1c).
